# EUROPÄISCHE PATENTANMELDUNG

(11) **EP 1 356 912 A2**
(43) Veröffentlichungstag der Anmeldung: **29.10.2003**
(21) Anmeldenummer: 03009301.7
(22) Anmeldetag: 24.04.2003
(51) Int. Cl.: B29C 44/34

(54) **Verfahren zur Herstellung eines schäumbaren Kunststoffes**

(30) Priorität: 26.04.2002 DE 10218696
(71) Anmelder: MöllerTech GmbH, 33649 Bielefeld (DE)
(72) Erfinder: Beckmann, Andreas Dipl.-Ing., 33611 Bielefeld (DE)
(74) Vertreter: Schirmer, Siegfried, Dipl.-Ing.

(57) **Zusammenfassung**

Zur Herstellung eines schäumbaren Kunststoffes wird dem Kunststoff ein physikalisches Treibmittel im festen Zustand zugeführt. Vorteilhafterweise ist das Treibmittel von einer festen Hülle umschlossen, die bei Erreichung der Plastifiziervorrichtung aufgelöst wird, wobei das Treibmittel im fließ- und/oder schüttfähigem Zustand, insbesondere in Tabletten- oder Pulverform, dem Kunststoff zugeführt wird. Das Treibmittel kann auch in Form von Endlosmaterial zugeführt werden.

## Beschreibung

Die Erfindung betrifft ein Verfahren zur Herstellung eines schäumbaren Kunststoffes, bei dem einem Kunststoff mindestens ein Treibmittel zugeführt wird, um einen schäumbaren Kunststoff zu erhalten.

Bei den herkömmlichen Verfahren werden physikalische Treibmittel, wie z. B. Kohlendioxid oder Stickstoff oder deren Gemisch, der aufgeschmolzenen und homogenisierten Kunststoffschmelze im gasförmigen, flüssigen oder superkritischen Zustand zugeführt. Dies kann z. B. in einem Extruder, einer Blasformmaschine oder in einer Spritzgießmaschine geschehen. Die Treibmittel werden bei Herstellungsverfahren mit diskontinuierlichen Schmelzeaufbereitungsprozessen (Spritzgießen, Extrusionsblasformen mit Speicherkopfprinzip) durch Dosiervorrichtungen ebenfalls diskontinuierlich zudosiert.

Beim Einsatz von physikalischen Treibmitteln wird häufig der Aggregatzustand derselben geändert, um entweder die Löslichkeit des Treibmittels in dem Polymer zu erhöhen und/oder die Schaumqualität zu verbessern.

Ein Nachteil der bisherigen Verfahren ist, daß sogenannte Hochdruckanlagen verwendet werden müssen, in denen Gase teilweise bei Drücken von 500 bar dem Kunststoff zugegeben werden.

Der Erfindung liegt daher die Aufgabe zugrunde, die Verwendung von Hochdruckanlagen in den Verfahren zur Herstellung eines aufschäumbaren Kunststoffes einsparen zu können.

Diese Aufgabe wird erfindungsgemäß dadurch gelöst, daß das Treibmittel im festen Zustand zugeführt wird.

Vorteilhafte Ausgestaltungen sind in den Unteransprüchen aufgezeigt.

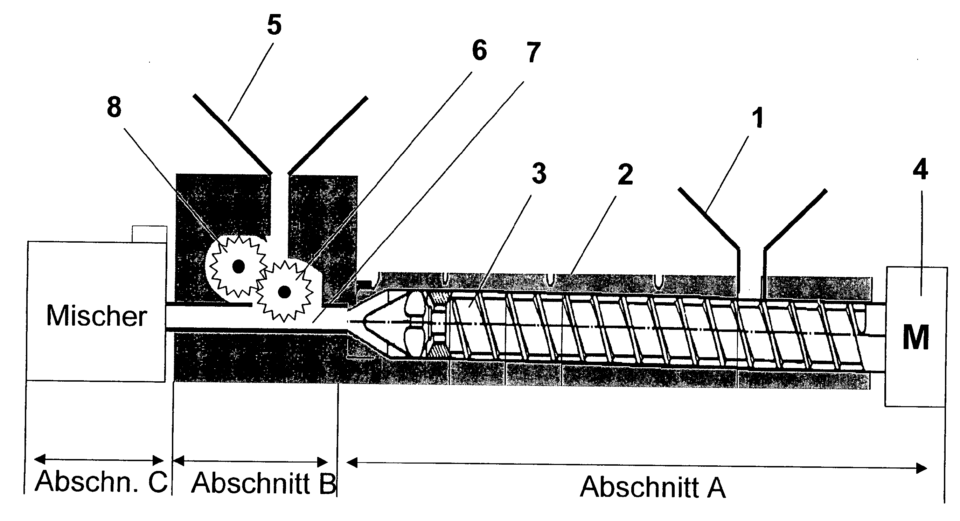

Eine Vorrichtung zur Durchführung des erfindungsgemäßen Verfahrens wird in der einzigen Figur dargestellt.

In einer Vorrichtung zur Durchführung des erfindungsgemäßen Verfahrens wird nach der Figur in einem ersten Abschnitt A Kunststoffgranulat über einen ersten Trichter 1 einer Plastifiziervorrichtung 2 zugegeben, aufgeschmolzen und homogenisiert.

Durch die Förderwirkung einer Schnecke 3, die in einer Plastifiziervorrichtung 2 durch den Motor 4 angetrieben wird, gelangt das aufgeschmolzene und homogenisierte Kunststoffmaterial in einen zweiten Abschnitt B. Dort wird das Treibmittel, z. B. Kohlendioxid, der Kunststoffschmelze erfindungsgemäß im festen Aggregatzustand zugeführt.

Die Zuführung dieses Treibmittels erfolgt beispielsweise in Pulver- oder Granulatform, bereitgestellt über einen zweiten Trichter 5. Die Dosierung des Treibmittels im festen Aggregatzustand erfolgt über ein erstes Zahnrad 6, welches das Treibmittel vom zweiten Trichter 5 in einen Schmelzekanal 7 transportiert, wobei der Kanal 7 mit der Plastifiziervorrichtung 2 fest verbunden ist.

Das erste Zahnrat 6 kann derart gestaltet sein, daß die Zahl der Zähne und/oder die Tiefe der Zahnradflanken und/oder die Umdrehungsgeschwindigkeit des ersten Zahnrades 6 auf die erforderliche Menge des Treibmittels abgestimmt ist.

Das erste Zahnrad 6 wird über einen in der Figur nicht dargestellten Motor angetrieben. Da bei der Dosierung mit Hilfe des ersten Zahnrades 6 die Gefahr besteht, daß schmelzeflüssiger Kunststoff aus dem Schmelzekanal 7 mitgeschleppt wird, dient ein zweites Zahnrad 8 dazu, das erste Zahnrad 6 auszukämmen.

Die nunmehr treibmittelhaltige Schmelze gelangt anschließend in einen dritten Abschnitt C, wo eine intensive Durchmischung der Schmelze mit dem Treibmittel erfolgt. Ist eine hinreichende Durchmischung erreicht, so wird der Kunststoff durch eine Düse aus der Mischeranordnung in normale Umgebungsbedingungen bzw. in ein Werkzeug gespritzt, wobei der Kunststoff abkühlt und einem starken Druckabfall ausgesetzt ist, wodurch der Kunststoff aufschäumt.

Das Treibmittel, z. B. Stickstoff oder Kohlendioxid, kann der Kunststoffschmelze erfindungsgemäß z. B. im festen Aggregatzustand zugeführt werden, beispielsweise. in Pulver- oder Tablettenform. Dazu mißt eine Dosiervorrichtung die erforderliche Menge ab und führt sie dem zweiten Trichter 5 zu.

Des weiteren kann das Treibmittel im festen Aggregatzustand als Stange vorliegen. Die Stange reicht von der Dosiereinrichtung in den zweiten Trichter 5 und wird bei Bedarf um eine entsprechende Länge nachgeführt.

In einer weiteren Ausführung des erfindungsgemäßen Verfahrens wird das Treibmittel von einer festen Hülle umgeben, die eine bestimmte Menge desselben enthält. Das Treibmittel kann beispielsweise in einer kugelförmigen Hülle angeordnet sein, die der Dosiereinrichtung zugeführt wird. Je nach Bedarf gibt diese die Kugel in den zweiten Trichter 5 ab.

Bevorzugt ist die Hülle aus einem Kunststoff gebildet, der mit der Kunststoffschmelze verträglich ist. Auf diese Weise ist sichergestellt, daß beim Auflösen der Hülle in der Kunststoffschmelze keine Nebenprodukte bzw. Unverträglichkeiten entstehen, die den weiter zu verarbeitenden Kunststoff negativ beeinflussen. Durch die Verwendung derartiger Hüllen ist es ebenfalls möglich, der Kunststoffschmelze chemische Treibmittel oder eine Mischung aus einem chemischen und einem physikalischen Treibmittel im festen Zustand zuzuführen. Eine Hülle wird bevorzugt bei Treibmitteln verwendet, die im festen Aggregatzustand nicht rieselfähig sind, z. B. gefrorenes Wasser.

Die in der vorangehenden Beschreibung, der Figur sowie in den Ansprüchen offenbarten Merkmale und Vorteile der Erfindung können sowohl einzeln als auch in beliebiger Kombination für die Verwirklichung der Erfindung in ihren verschiedenen Ausführungsformen wesentlich sein.

### Aufstellung der Bezugszeichen:

- 1: erster Trichter
- 2: Plastifiziervorrichtung
- 3: Schnecke
- 4: Motor
- 5: zweiter Trichter
- 6: erstes Zahnrad
- 7: Schmelzekanal
- 8: zweites Zahnrad

## Patentansprüche

1. Verfahren zur Herstellung eines schäumbaren Kunststoffes, bei dem einem Kunststoff mindestens ein Treibmittel zugeführt wird, um einen schäumbaren Kunststoff zu erhalten, **dadurch gekennzeichnet, daß** das Treibmittel im festen Zustand zugeführt wird.

2. Verfahren nach Anspruch 1, **dadurch gekennzeichnet, daß** als Treibmittel ein physikalisches Treibmittel verwendet wird.

3. Verfahren nach einem der vorangehenden Ansprüche, **gekennzeichnet durch** die Verwendung einer Mischung aus chemischen und physikalischen Treibmitteln.

4. Verfahren nach einem der vorangehenden Ansprüche, **dadurch gekennzeichnet, daß** das oder die Treibmittel im festen Aggregatzustand dem Kunststoff zugeführt werden.

5. Verfahren nach einem der Ansprüche 1 bis 5, **dadurch gekennzeichnet, daß** das oder die Treibmittel von einer festen Hülle verschlossen dem Kunststoff zugeführt werden.

6. Verfahren nach Anspruch 5, **dadurch gekennzeichnet, daß** die Hülle aufgelöst wird, wenn sie die Plastifiziervorrichtung (2) erreicht hat.

7. Verfahren nach einem der vorangehenden Ansprüche, **dadurch gekennzeichnet, daß** das oder die Treibmittel im fließ- und/oder schüttfähigen Zustand, insbesondere in Tabletten- oder Pulverform, dem Kunststoff zugeführt werden.

8. Verfahren nach einem der Ansprüche 1 bis 7, **dadurch gekennzeichnet, daß** das Treibmittel in Form von Endlosmaterial dem Kunststoff zugeführt wird.

9. Verfahren nach einem der vorangehenden Ansprüche, **dadurch gekennzeichnet, daß** der Kunststoff im schmelzeflüssigen Zustand gehalten wird, während das Treibmittel zugeführt wird.

10. Verfahren nach einem der Ansprüche 1 bis 9, **dadurch gekennzeichnet, daß** der Kunststoff oder Vorstufen desselben im festen Zustand, insbesondere als Granulat, gehalten wird bzw. werden, während das Treibmittel zugeführt wird.
